# EUROPEAN PATENT SPECIFICATION

(11) **EP 3 468 846 B1**
(45) Date of publication and mention of the grant of the patent: **27.05.2020**
(21) Application number: 17727270.5
(22) Date of filing: 07.06.2017
(51) Int. Cl.: B60T 7/10

(54) **FRAME FOR TRACTOR PROVIDED WITH FLEXIBLE CABLE APPARATUS**
RAHMEN FÜR EINEN TRAKTOR AUSGESTATTET MIT EINER FLEXIBLEN KABELVORRICHTUNG
CHÂSIS DE TRACTEUR AVEC UN DISPOSITIF AVEC CÂBLE FLEXIBLE

(30) Priority: 10.06.2016 IT UA20164286
(43) Date of publication of application: 17.04.2019
(73) Proprietor: CNH Industrial Italia S.P.A., 10135 Turin (IT)
(72) Inventor: MAGRINI, Sergio, 41100 Modena (IT); PIROLA, Carlo, Giovanni, 4020 Linz (AT)
(74) Representative: CNH Industrial IP Department
(86) International application number: PCT/EP2017/063867
(87) International publication number: WO 2017/211905

(56) References cited:
- WO-A1-2005/103644
- WO-A1-2009/018471
- JP-A- H11 325 047

## Description

### BACKGROUND OF THE INVENTION

### 1. Field of the Invention

The present invention relates to applies to flexible cable assemblies and more particularly to flexible cable assemblies used to actuate hand brakes.

### 2. Description of the Related Art

One of the key elements provided in work machines, such as tractors, is a secondary brake system, also known as a hand brake. This brake is in addition to the existing service brakes of the tractor which may be hydraulic or pneumatic in actuation. The secondary brake is usually provided at some location within the power train of the tractor that connects the motive output of the tractor's power unit to the drive wheels. The secondary brake may take many forms, all of which are intended to hold the tractor at rest or be a secondary braking system to the service brakes. It is a common practice to actuate such a brake using a flexible cable apparatus, also known as a Bowden cable. It consists of a long flexible cable housing and a cable extending coaxially through the housing. The ends of the cable housing are fixed to the frame of the tractor and the cable itself is connected at one end to the input for the brake and at the other end to a hand brake located for actuation by the tractor operator.

The usual indicator of secondary brake operation engagement is a simple switch that is illuminates a light when the secondary brake is anywhere from partially to fully engaged. While this indicates that the secondary braking system is engaged, it is an approximation and does not take into account the force with which the operator applies to the brake apparatus. JP H11 325047 discloses a flexible cable mounted on a frame comprising a Bowden cable. However, JP H11 325047 does not address the problem of measuring the force acting on the Bowden cable housing.

Accordingly, what is needed in the art is apparatus that indicates the degree to which the secondary brake is actuated.

### SUMMARY OF THE INVENTION

In the present invention seeks to indicate the degree of engagement by indicating load in a flexible cable apparatus.

The present invention also seeks to indicate the load in a simplified and efficient manner.

The invention concerns a frame for a tractor according to claim 1 and a method according to claim 14, the frame having an outer cable housing and a coaxial cable therethrough to which a load is supplied and a load cell for indicating the load applied to the flexible cable apparatus. The flexible cable apparatus is characterized by a U-shaped bracket having an interconnecting base and first and second legs extending from the ends of the base with the first leg being mounted on the frame and the second leg mounted to one end of the cable housing. The load cell is connected between the frame and the second leg away from the interconnecting base so that the load indicated on the load cell is proportional to the load on the cable housing.

In another form, the invention is applied to a tractor having a secondary brake apparatus and a hand lever with the flexible cable connected between the hand lever and the brake apparatus of the tractor. The flexible cable apparatus mounted on the tractor frame and has an outer cable housing and a coaxial cable therethrough connecting the hand lever and the tractor secondary brake apparatus to which a load is supplied and a load cell indicates the load applied to the flexible cable apparatus. The flexible cable apparatus is characterized by a U-shaped bracket having an interconnecting base and first and second legs extending from the ends of the base with the first leg being mounted on the frame and the second leg mounted to one end of the cable housing. The load cell is connected between the tractor frame and the second leg away from the interconnecting base so that the load indicated on the load cell is proportional to the load on the cable housing.

In still another form, the invention is applied to a tractor towing a trailer with a modulating brake system and the load from the load cell is used to modulate the braking system of the trailer.

An advantage of the present invention is that the load on a flexible cable apparatus is determined by reaction loads on static components.

Another advantage is the ability to use a smaller load cell in measuring hand brake loads.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 shows a partial view of a tractor with which the flexible cable apparatus of the present invention may be used;
Fig. 2 is an expanded perspective view of the flexible cable of a portion of the flexible cable apparatus illustrated in Fig. 1;
Fig. 3 is a schematic force diagram of the apparatus of Fig. 2 illustrating the principals of the invention; and
Fig. 4 is a schematic showing illustration of the use of the flexible cable apparatus of Figs. 1-3 in connection with a towed trailer.

Corresponding reference characters indicate corresponding parts throughout the several views. The exemplification set out herein illustrates one embodiment of the invention and such exemplification is not to be construed as limiting the scope of the invention in any manner.

### DETAILED DESCRIPTION OF THE INVENTION

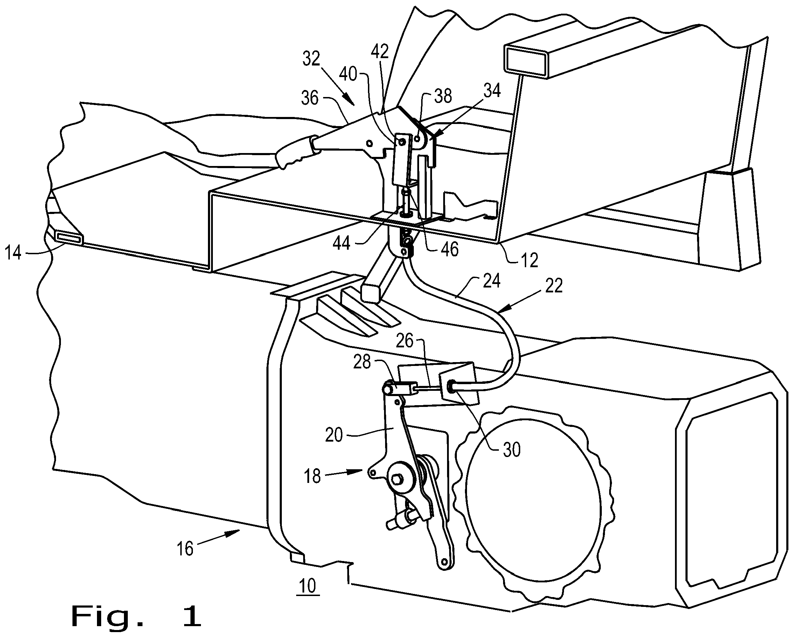

Referring now to the drawings, and more particularly to Fig. 1, there is shown a tractor 10 shown in a partial view but including a frame 12 carrying a power unit 14 that applies a torque and RPM output through a power train 16 to a plurality of ground drive wheels (not shown to simplify the understanding of the present invention). Typically the power unit may be a compression ignition or diesel engine owing to its fuel economy, torque output and durability. The power unit 14 is connected to the power train 16 through a series of shafts and gears and a differential unit to apply a rotary power output to the wheels and other components of the tractor. The tractor 10 has a service brake system (not shown) and a secondary brake apparatus 18, sometimes called the hand brake, to apply a braking force to the tractor to hold it in a stationary position. With tractors of the type shown in Fig. 1, the secondary brake apparatus may be a shoe abutting a rotary output shaft within the power train 16 or other device to frictionally hold the shafts from rotation to hold the tractor 10 in place. The secondary brake apparatus 18 is actuated by a lever 20 mounted on the power train 16. Although illustrated in this position, the secondary brake apparatus 18 may be employed at any appropriate location in the tractor 10 to hold the tractor 10 in place. The lever 20 is actuated by a flexible cable apparatus 22 which includes a cable housing 24 and a coaxial cable 26 slidable within the cable housing 24 to apply a pulling force to a bracket 28 pivotally connected to the end of lever 20. A lower cable housing bracket 30 secures the lower end of cable housing 24 to the tractor frame though the power train housing and the opposite end of the flexible cable apparatus extends to a hand brake apparatus 32 conveniently located within reach of the tractor operator. A mounting bracket 34 consisting of upright plates is secured to the frame 12 and pivotally supports a hand brake 36 through a pivotal support 38 usually in the form of a pin. A bracket 42 and an upper cable mounting bracket 40 in a U-shape is pivotally connected to hand brake 36 at a pivotal mounting 42. The upper end of cable 26 has a threaded section 44 and adjustment nuts 46 to allow for adjustment of the length of cable 26.

In operation, the hand brake 36 is pulled by an operator from the disengaged position shown in Fig. 1 to a position in which a force is applied to the end of lever 20 to actuate the secondary brake apparatus 18. It is currently the practice to simply have a switch that is closed when the hand brake 36 is moved from the position of Fig. 1 to indicate that the brake is in operation. However, the current system provides not information regarding the force with which the brake may be applied. This can become a factor when one considers the physical strength variations between operators of tractors. It would be desirable to have an indication of the force with which the secondary brake apparatus is applied. However, incorporating a force indication function within the system becomes difficult, owing to the fact that the force on the parts needed to be indicated is done with the parts moving. The levers 20, 36 and the cable 26 all go through a series of movements making it significantly more difficult to effectively measure force applied to them. In addition, some portions of the mechanism for the secondary brake apparatus 18 are subjected to the debris and environmental conditions under which a tractor operates.

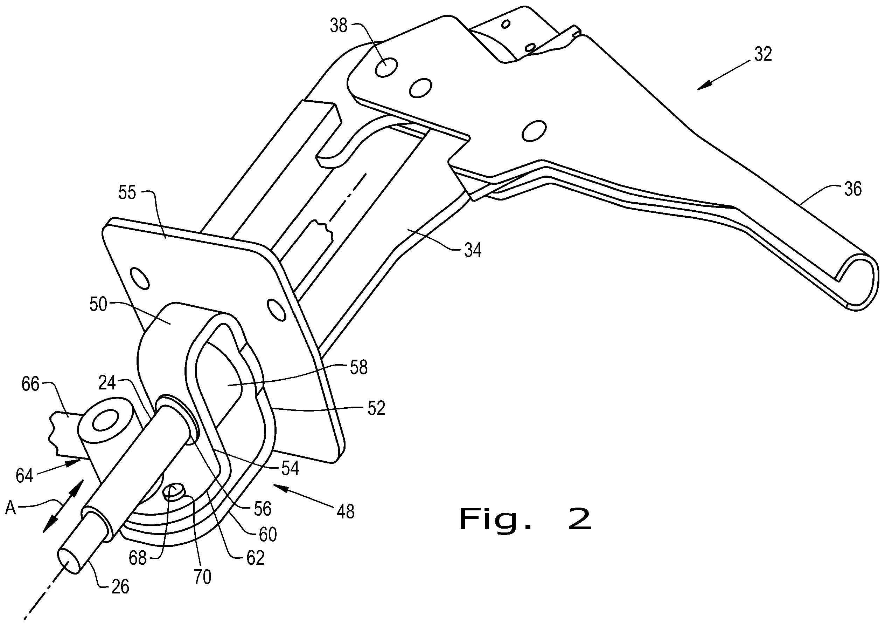

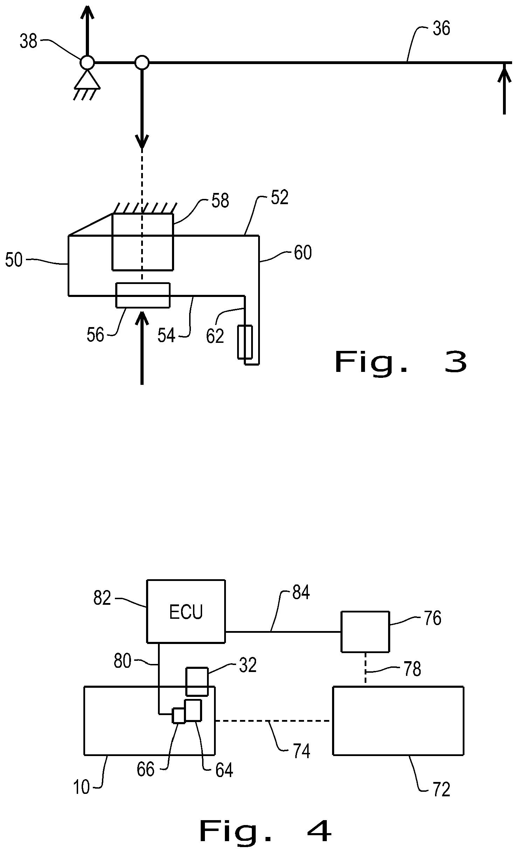

In accordance with the present invention, the system illustrated in Figs. 2 and 3 effectively incorporates a load sensing function within the actuation of the secondary brake apparatus of Fig. 1. Referring particularly to Fig. 2, the apparatus includes a bracket 48 formed from an interconnecting base 50 and a first leg 52 and second leg 54 extending laterally from base 50 and generally parallel to one another. The first leg 52 is connected to frame 12 of the tractor 10 through a plate 55 that supports the mounting bracket 34. The details of the manner of affixing the first leg 52 are not shown to simplify the understanding of the present invention. The second leg 54 has an opening 56 which provides a mounting point for the upper end of cable housing 24. Thus, the cable 26 extends through cable housing towards hand brake 36 and a sleeve 58 surrounds cable 26. As illustrated in Fig. 2, the second leg 54 is integral with interconnecting base 50 and its deflection is influenced by the stiffness of the combined structure, as described below. Alternatively, leg 54 may be connected to base 50 by a hinge at the junction between base 50 and leg 54.

An extension 60 is integral with and extends at right angles to first leg 52 and a second leg extension 62 is integral with and extends at right angle to leg 54. The extensions 62 and 60 are parallel to one another and the relative movement between the extension 62 and 60 partially reflects the reaction load applied to cable housing 24 and thus the load on the cable 26. The relative movement between the extensions is sensed by a sensor such as load cell 64 with an electrical output connector 66. Such a load cell measures load in the direction A and can be obtained from many different suppliers. As illustrated, the load cell 64 has a cylindrical portion threaded into extension 60 and measures relative movement and load between the base of the load cell 64 and extension 62 to which it is mounted. In order to adequately protect load cell 64 from overloading, a safety pin 68 secured to extension 60 extends through an expanded clearance hole 70 in extension 62. The clearance of hole 70 is selected so that the range of expected movement does not exceed the limits of the load cell 64. Furthermore, in the event of a load cell failure, the limit pin 68 ensures that a force may continue to be applied to cable 26 and thus actuate the secondary brake apparatus 18.

The principles underlying the indication of load are illustrated in Fig. 3 in which the components are illustrated in schematic fashion and particularly the extension 60 and 62. The modulus of elasticity of the material and its geometry making up bracket 48 are taken into account to produce a predetermined stiffness, usually expressed in N/m or Lbs/in. This predetermined stiffness is taken into account when the deflection of the lower leg 56 is sensed to determine load. In addition, the reaction load on second leg 56 at cable housing 24 is at a point between the interconnecting base 58 and the extension 62 which measures the deflection. Thus, with the stiffness of the interconnecting base 50 and the first and second legs 52 and 54, the load indicated by load cell 64 is a fraction of the reaction load applied to second leg 56 through cable housing 24. As a result, a smaller load cell can be used to safely measure the relatively high loads incurred when an operator pulls with force on hand brake 36. With this arrangement, a compact installation of the load cell 64 is enabled and a smaller load cell may be employed to indicate loads of significantly higher quantities. Alternatively, a hinged connection between leg 54 and base 50 provides the benefits of the unitary structure of Fig.2, with a load cell having a higher load capacity but still taking advantage of the multiplier effect of having the reaction load on the cable housing 24 between the hinge and the load cell 64.

In addition to the benefits of the ability to indicate load on the secondary braking system beyond simple disengagement of the hand brake apparatus 32, the load signal may be used in the system shown schematically in Fig. 4. Referring particularly to Fig. 4, a trailer is towed by tractor 10 through a mechanical connection 74 and has a trailer braking system 76 connected to the trailer ground wheels through a mechanical connection indicated by dashed lines 78. The trailer braking system 76 is controlled by an ECU 82 through a signal line 84 that may be employed to modulate the force applied to the trailer 72. The load indication from load cell 64 is sent to line 80 through connector 66 and to the ECU 82 to provide a signal that enables modulation of the braking force applied to trailer 72 in a controlled proportion to the amount of force used to apply the secondary braking apparatus 18 of the tractor 10. This is beneficial when complying with certain governmental regulations regarding the operation of vehicles.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A frame (12) for a tractor mounting a flexible cable apparatus (22) comprising a Bowden cable having an outer cable housing (24) and a coaxial cable (26) therein to which a load is applied, and a load cell (64) for indicating the load applied to said flexible cable apparatus (22) ;
wherein a U-shaped bracket (48) comprises an interconnecting base (50) and first and second legs (52, 54) extend from the ends of said base (50), said first leg (52) being mounted on the frame (12) and **characterised in that** said second leg (54) is mounted to one end of said cable housing (24), the load cell (64) is connected between the frame (12) and said second leg (54), the load indicated on said load cell (64) is proportional to the load on said cable housing (24).

2. The frame (12) as claimed in claim 1, wherein said second leg (54) is hinged to said interconnecting base (50) or wherein the connection between said second leg (54) and said interconnecting base (50) has a predetermined stiffness.

3. The frame (12) as claimed in claim 1 or 2, wherein the load cell (64) is connected to said second leg (54) farther away from said interconnecting base (50) than the point at which said second leg (54) is mounted to one end of said cable housing (24), to obtain a multiplier effect.

4. The frame (12) as claimed in claim 1, wherein said first and second legs (52, 54) of said bracket have a right angle extensions (60, 62) at their ends so that the extensions (60, 62) are parallel and opposed to one another, said load cell (64) indicating relative load between said extensions (60, 62).

5. The frame (12) as claimed in claim 4, wherein said load cell (64) is mounted to one of said extensions (60) and measures the relative movement of the other extension (62) to indicate load.

6. The frame (12) as claimed in claim 5, wherein said load cell (64) has a threaded end threaded into the extension (60) of said first leg (52) and measures and extends through the extension (62) of said second leg (54) to measure load.

7. The frame (12) as claimed in claim 5, further comprising a pin (68) on one of said extensions (60) and received in a hole (70) in the other extension (62) having a clearance permitting a normal range of deflection applied to said load cell (64)

8. The frame (12) according to any one of the preceding claims wherein said first leg (52) has an opening therethrough and said flexible cable (26) extends through said opening.

9. The frame (12) as claimed in claim 6, further comprising a sleeve (58) positioned around the opening in said first leg (52) through which said cable (26) extends.

10. The frame (12) as claimed in any one of the preceding claims, further comprising a braking apparatus (18) actuatable by said flexible cable (26) at one end thereof and a hand brake (36) connected to the opposite end of said flexible cable (26) for actuating the brake apparatus (18), said U-shaped bracket (48) positioned at the end of said cable housing (24) adjacent said hand brake (36).

11. A tractor (10) having a power train (16) connecting a power unit (14) to ground drive wheels, said brake apparatus (18) being positioned to be applied to said power train (16), said tractor (10) comprising a frame according to claim 8

12. A tractor (10) comprising a trailer (72) towed by said tractor (10) and a braking system (76) on said trailer (72) capable of modulation, said tractor (10) having a controller (82) for modulating the braking of said trailer (72), said controller (82) receiving a load input signal from said load cell (64) wherein said tractor (10) comprises the frame according to claim 9.

13. The frame (12) as claimed in claim 10, wherein the degree of modulation of said trailer braking system (76) is proportional to the load indicated by said load cell (64).

14. A method for determining a load on a hand brake apparatus (32) for a secondary brake apparatus (18) for an agricultural vehicle, the vehicle comprising a secondary brake apparatus (18), a hand brake apparatus (32) and a Bowden cable having an outer cable housing (24) and a coaxial cable (26) therein to which a load is applied by said hand brake apparatus (32) to activate said secondary brake apparatus (18), **characterized in that** the method comprises the steps of:
- providing a U-shaped bracket (48) having an interconnecting base (50) and first and second legs (52, 54) extending from the ends of said base (50), said first leg (52) being mounted on the frame (12) and said second leg (54) mounted to one end of said cable housing (24);
- providing a load cell (64) being connected between the frame (12) and said second leg (54) away from said interconnecting base (50); and
- determining the load on said cable housing (24) by said load cell (64).

## Patentansprüche

1. Rahmen (12) für einen Traktor, der eine flexible Kabeleinrichtung (22) hält, die einen Bowdenzug umfasst, der eine äußere Kabelummantelung (24) und in dieser ein koaxiales Kabel (26) aufweist, das belastet wird, und die eine Kraftmessdose (64) zum Anzeigen der Last, die auf die flexible Kabeleinrichtung (22) aufgebracht wird umfasst; wobei eine U-förmige Halterung (48) einen Verbindungssockel (50) und einen ersten und einen zweiten Schenkel (52, 54) umfasst, die sich von den Enden des Sockels (50) aus erstrecken, wobei der erste Schenkel (52) am Rahmen (12) angebracht ist; **dadurch gekennzeichnet, dass** der zweite Schenkel (54) an einem Ende der Kabelummantelung (24) befestigt ist, wobei die Kraftmessdose (64) zwischen den Rahmen (12) und den zweiten Schenkel (54) geschaltet ist, wobei die Last, die von der Kraftmessdose (64) angegeben wird, proportional zur Last auf die Kabelummantelung (24) ist.

2. Rahmen (12) nach Anspruch 1, wobei der zweite Schenkel (54) gelenkig am Verbindungssockel (50) angebracht ist oder wobei die Verbindung zwischen dem zweiten Schenkel (54) und dem Verbindungssockel (50) eine vorbestimmte Steifheit aufweist.

3. Rahmen (12) nach Anspruch 1 oder 2, wobei die Kraftmessdose (64) weiter entfernt vom Verbindungssockel (50) mit dem zweiten Schenkel (54) verbunden ist, als der Punkt, an dem der zweite Schenkel (54) an einem Ende der Kabelummantelung (24) befestigt ist, um einen Multiplikatoreffekt zu bewirken.

4. Rahmen (12) nach Anspruch 1, wobei der erste und der zweite Schenkel (52, 54) der Halterung an ihrem Ende eine rechtwinklige Verlängerung (60, 62) aufweisen, sodass die Verlängerungen (60, 62) parallel zueinander sind und einander gegenüberliegen, wobei die Kraftmessdose (64) eine Relativlast zwischen den Verlängerungen (60, 62) angibt.

5. Rahmen (12) nach Anspruch 4, wobei die Kraftmessdose (64) an einer der Verlängerungen (60) angebracht ist und die Relativbewegung der anderen Verlängerung (62) misst, um eine Last anzugeben.

6. Rahmen (12) nach Anspruch 5, wobei die Kraftmessdose (64) ein mit einem Gewinde versehenes Ende aufweist, das in die Verlängerung (60) des ersten Schenkels (52) geschraubt ist und sich durch die Verlängerung (62) des zweiten Schenkels (54) erstreckt, um eine Last zu messen.

7. Rahmen (12) nach Anspruch 5, weiterhin umfassend einen Stift (68) an einer der Verlängerungen (60), der in einer Öffnung (70) in der anderen Verlängerung (62) aufgenommen ist, die einen Freiraum aufweist, der eine Auslenkung, die auf die Kraftmessdose (64) ausgeübt wird, in einem normalen Bereich erlaubt.

8. Rahmen (12) nach einem der vorangehenden Ansprüche, wobei der erste Schenkel (52) eine Öffnung durch ihn hindurch aufweist und sich das flexible Kabel (26) durch diese Öffnung hindurch erstreckt.

9. Rahmen (12) nach Anspruch 6, weiterhin umfassend eine Hülse (58), die um die Öffnung im ersten Schenkel (52) herum angeordnet ist, durch die sich das Kabel (26) erstreckt.

10. Rahmen (12) nach einem der vorangehenden Ansprüche, weiterhin mit einer Bremseinrichtung (18), die durch das flexible Kabel (26) an einem Ende dessen und eine Handbremse (36) betätigbar ist, die mit dem anderen Ende des flexiblen Kabels (26) verbunden ist, um die Bremseinrichtung (18) zu betätigen, wobei die U-förmige Halterung (48) an einem Ende der Kabelummantelung (24) benachbart zur Handbremse (36) angebracht ist.

11. Traktor (10) mit einem Antriebsstrang (16), der einen Antrieb (14) mit auf dem Boden befindlichen Antriebsrädern verbindet, wobei die Bremseinrichtung (18) derart angeordnet ist, dass sie auf den Antriebsstrang (16) angewendet werden kann, wobei der Traktor (10) einen Rahmen nach Anspruch 8 umfasst.

12. Traktor (10) mit einem Anhänger (72), der vom Traktor (10) gezogen wird, und einem Bremssystem (76) am Anhänger (72), das einstellbar ist, wobei der Traktor (10) eine Steuereinrichtung (82) zum Einstellen der Bremse des Anhängers (72) aufweist, wobei die Steuereinrichtung (82) ein Lasteingangssignal von der Kraftmessdose (64) empfängt, wobei der Traktor (10) den Rahmen nach Anspruch 9 umfasst.

13. Rahmen (12) nach Anspruch 10, wobei der Einstellgrad des Anhängerbremssystems (76) proportional zu der Last ist, die von der Kraftmessdose (64) angezeigt wird.

14. Verfahren zum Bestimmen einer Last auf eine Handbremseinrichtung (32) für eine sekundären Bremseinrichtung (18) für ein landwirtschaftliches Fahrzeug, wobei das Fahrzeug eine sekundäre Bremseinrichtung (18), eine Handbremseinrichtung (32) und einen Bowdenzug mit einer äußeren Kabelummantelung (24) und einem koaxialen Kabel (26) darin umfasst, das durch die Handbremseinrichtung (32) belastet wird, um die sekundäre Bremseinrichtung (18) zu aktivieren, **dadurch gekennzeichnet, dass** das Verfahren die Schritte umfasst:
- Bereitstellen einer U-förmigen Halterung (48) mit einem Verbindungssockel (50) und einem ersten und einem zweiten Schenkel (52, 54), die sich von den Enden des Sockels (50) aus erstrecken, wobei der erste Schenkel (52) am Rahmen (12) angebracht ist und der zweite Schenkel (54) an einem Ende der Kabelummantelung (24) angebracht ist;
- Bereitstellen einer Kraftmessdose (64), die entfernt vom Verbindungssockel (50) zwischen den Rahmen (12) und den zweiten Schenkel (54) geschaltet ist; und
- Bestimmen der Last auf die Kabelummantelung (24) durch die Kraftmessdose (64).

## Revendications

1. Châssis (12) de tracteur, sur lequel est monté un appareil à câble flexible (22) comprenant un câble Bowden muni d'un logement de câble extérieur (24) enveloppant un câble coaxial (26), sur lequel une charge est appliquée, ainsi qu'un capteur de force (64) indiquant la charge appliquée sur ledit appareil à câble flexible (22) ;
dans lequel un support en U (48) comprend une base d'accouplement (50) et un premier et un deuxième montants (52, 54) s'étendant à partir des extrémités de ladite base (50), ledit premier montant (52) étant monté sur le châssis (12) et **caractérisé en ce que**
ledit deuxième montant (54) est monté sur une extrémité dudit logement de câble (24), le capteur de force (64) étant connecté entre le châssis (12) et ledit deuxième montant (54), la charge indiquée par ledit capteur de force (64) étant proportionnelle à la charge appliquée sur ledit logement de câble (24).

2. Châssis (12) selon la revendication 1, dans lequel ledit deuxième montant (54) est articulé sur ladite base d'accouplement (50) ou dans lequel le raccordement entre ledit deuxième montant (54) et ladite base d'accouplement (50) présente une raideur prédéterminée.

3. Châssis (12) selon la revendication 1 ou 2, dans lequel le capteur de force (64) est connecté audit deuxième montant (54) plus loin de ladite base d'accouplement (50) que le point où le ledit deuxième montant (54) est monté à une extrémité dudit logement de câble (24) afin d'obtenir un effet multiplicateur.

4. Châssis (12) selon la revendication 1, dans lequel lesdits premier et deuxième montants (52, 54) dudit support ont des extensions perpendiculaires (60, 62) à leurs extrémités telles que les extensions (60, 62) sont parallèles et opposées l'une par rapport à l'autre, ledit capteur de force (64) indiquant la charge relative entre lesdites extensions (60, 62).

5. Châssis (12) selon la revendication 4, dans lequel ledit capteur de force (64) est monté sur l'une desdites extensions (60) et mesure le mouvement relatif de l'autre extension (62) afin d'afficher la charge.

6. Châssis (12) selon la revendication 5, dans lequel ledit capteur de force (64) a une extrémité filetée vissée dans l'extension (60) dudit premier montant (52) et s'étend à travers l'extension (62) dudit deuxième montant (54) pour mesurer la charge.

7. Châssis (12) selon la revendication 5, comprenant en outre une goupille (68) sur une desdites extensions (60) et insérée dans un orifice (70) dans l'autre extension (62), avec un dégagement permettant une plage normale de déviation appliquée sur ledit capteur de force (64).

8. Châssis (12) selon l'une quelconque des revendications précédentes, dans lequel ledit premier montant (52) comporte une ouverture traversante et ledit câble flexible (26) s'étend à travers ladite ouverture.

9. Châssis (12) selon la revendication 6, comprenant en outre une manchette (58) positionnée autour de l'ouverture dans ledit premier montant (52) à travers laquelle ledit câble (26) s'étend.

10. Châssis (12) selon l'une quelconque des revendications précédentes, comprenant en outre un dispositif de freinage (18) actionnable par ledit câble flexible (26) à une de ses extrémités et un frein à main (36) relié à l'extrémité opposée dudit câble flexible (26) permettant d'actionner le dispositif de freinage (18), ledit support en U (48) étant positionné à l'extrémité dudit logement de câble (24) adjacent audit frein à main (36).

11. Tracteur (10) ayant une prise de force (16) reliant une unité de puissance (14) aux roues motrices de contact au sol, ledit dispositif de freinage (18) étant positionné afin d'être appliqué à ladite prise de force (16), ledit tracteur (10) comprenant un châssis selon la revendication 8.

12. Tracteur (10) comprenant une remorque (72) tractée par ledit tracteur (10) et un système de freinage (76) dont est équipé ladite remorque (72) et pouvant être modulé, ledit tracteur (10) disposant d'un contrôleur (82) permettant de moduler le freinage de ladite remorque (72), ledit contrôleur (82) recevant un signal d'entrée de charge dudit capteur de force (64), ledit tracteur (10) comprenant le châssis selon la revendication 9.

13. Châssis (12) selon la revendication 10, dans lequel le degré de modulation dudit système de freinage de remorque (76) est proportionnel à la charge indiquée par ledit capteur de force (64).

14. Méthode permettant de déterminer la charge exercée sur un dispositif de freinage à main (32) d'un dispositif de freinage secondaire (18) d'un engin agricole, l'engin comprenant un dispositif de freinage secondaire (18), un dispositif de freinage à main (32) ainsi qu'un câble Bowden muni d'un logement de câble extérieur (24) enveloppant un câble coaxial (26) sur lequel une charge est appliquée par ledit dispositif de freinage à main (32) afin d'activer ledit dispositif de freinage secondaire (18), **caractérisé en ce que** la méthode inclut les étapes suivantes :
- l'utilisation d'un support en U (48) comportant une base d'accouplement (50) et un premier et un deuxième montants (52, 54) s'étendant à partir des extrémités de ladite base (50), ledit premier montant (52) étant monté sur le châssis (12) et ledit deuxième montant (54) étant monté à une extrémité dudit logement de câble (24) ;
- l'utilisation d'un capteur de force (64) connecté entre le châssis (12) et ledit deuxième montant (54) positionné à distance de ladite base d'accouplement (50) ; et
- la détermination de la charge appliquée sur ledit logement de câble (24) par ledit capteur de force (64).
